(19) Europäisches Patentamt
European Patent Office
Office européen des brevets

(11) Veröffentlichungsnummer: **0 108 247**
**B1**

# (12) EUROPÄISCHE PATENTSCHRIFT

(45) Veröffentlichungstag der Patentschrift: **25.06.86**

(21) Anmeldenummer: **83109873.6**

(22) Anmeldetag: **04.10.83**

(51) Int. Cl.⁴: **B 01 D 53/34**, B 01 D 51/10, C 01 B 17/16, F 23 J 15/00

## (54) Verfahren zur Entfernung unerwünschter gasförmiger Bestandteile aus heissen Rauchgasen.

(30) Priorität: **08.10.82 DE 3237387**

(43) Veröffentlichungstag der Anmeldung: **16.05.84 Patentblatt 84/20**

(45) Bekanntmachung des Hinweises auf die Patenterteilung: **25.06.86 Patentblatt 86/26**

(84) Benannte Vertragsstaaten: **AT BE CH DE FR GB IT LI NL**

(56) Entgegenhaltungen:
**DE - A - 1 940 167**
**DE - A - 2 848 721**
**DE - B - 2 028 456**
**DE - C - 867 241**

(73) Patentinhaber: **Linde Aktiengesellschaft, Abraham-Lincoln-Strasse 21, D-6200 Wiesbaden (DE)**

(72) Erfinder: **Linde, Gerhard, Dr.-Ing., Eichleite 50, D-8022 Grünwald (DE)**

(74) Vertreter: **Schaefer, Gerhard, Dr., Linde Aktiengesellschaft Zentrale Patentabteilung, D-8023 Höllriegelskreuth (DE)**

**EP 0 108 247 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Entfernung unerwünschter gasförmiger Bestandteile aus heissen, bei der Verbrennung kohlenstoffhaltiger Brennstoffe anfallenden Rauchgasen, bei dem das Rauchgas zur Abkühlung und Vorreinigung über Regeneratoren geleitet und anschliessend zur Absorption von $SO_2$ einer Wäsche mit einem physikalisch wirkenden Lösungsmittel zugeführt wird, das nach Aufnahme des $SO_2$ einer Regenerierung unterzogen und in die Wäsche zurückgeführt wird.

Das Problem der Entfernung unerwünschter gasförmiger Bestandteile aus Verbrennungsgasen gewinnt zunehmend an Aktualität. Insbesondere die schwefelhaltigen Bestandteile, die bei der Verbrennung fossiler Brennstoffe in kohle- oder ölbeheizten Kraftwerken in den Verbrennungsgasen auftreten, gelten als schädlich für die Umwelt und sind daher aus denVerbrennungsgasen zu entfernen, bevor diese als Abgas in die Atmosphäre entlassen werden.

Die Entfernung von Schwefeldioxid aus derartigen Verbrennungsanlagen wurden bisher meist auf chemischem Wege durchgeführt, und zwar durch Wäsche mit Absorptionsmitteln, die als wirksame Bestandteile Alkali- oder Erdalkaliverbindungen enthielten. Gewöhnlich wurden in diesem Zusammenhang Erdalkalioxide oder -carbonate oder auch Alkalicarbonate, -hydrogencarbonate, -sulfite, -hydrogensulfite oder -thiosulfate, beispielsweise des Natriums, verwendet. Als Reaktionsprodukte ergaben sich dabei die entsprechenden schwefelhaltigen Salze, nämlich Sulfite, Hydrogensulfite und Sulfate. Diese chemischen Wäschen werden meist bei relativ hohen Temperaturen durchgeführt, die nur unwesentlich oder gar nicht unter denjenigen Temperaturen lagen, mit denen die Verbrennungsgase selbst anfielen. Die Apparaturen zur Durchführung dieser Reinigungsverfahren waren somit einer ständigen und starken thermischen Belastung ausgesetzt und mussten aus den geeigneten hitzebeständigen Werkstoffen gefertigt sein. Zudem wurden die schliesslich abzublasenden, oft noch wasserdampfhaltigen Abgase bei relativ hohen Temperaturen in die Atmosphäre abgegeben, auch wenn ihnen ein Teil ihrer Wärmeenergie noch vorher, beispielsweise zur Erzeugung von Heissdampf oder zur Vorwärmung der Verbrennungsluft, entzogen wurde.

Es wurde auch schon vorgeschlagen (DE-A-2 848 721 oder die entsprechende EP-A1-11 228), die Wäsche zur Entfernung der gasförmigen Bestandteile unterhalb von 0°C mit einem physikalisch wirkenden Waschmittel, wie insbesondere Dimethylformamid, durchzuführen. Dabei werden die an sich bekannten günstigen Wirkungen einer mit einem physikalisch wirkenden Waschmittel durchgeführten Tieftemperaturwäsche mit der Ausnutzung der in den heissen Abgasen enthaltenen Hochtemperaturwärme zur Deckung der bei der Tieftemperaturwäsche auftretenden Kälteverluste kombiniert. Der Nachteil dieses Verfahrens besteht jedoch darin, dass die physikalische Wäsche mit Dimethylformamid wegen des bei Umgebungstemperaturen relativ hohen Dampfdruckes des Waschmittels bei Temperaturen von etwa −40°C durchgeführt werden muss. Die Abkühlung des Rauchgases auf diese niedrigen Temperaturen erfordert verhältnismässig viel Energie und apparativen Aufwand.

Aufgabe der vorliegenden Erfindung ist es daher, ein Verfahren der eingangs genannten Art so auszugestalten, dass es bei gleichzeitiger Verringerung des Energiebedarfes und der Investitionskosten den Anforderungen der Behörden entsprechend wirksam durchgeführt werden kann und das abgetrennte $SO_2$ in reiner und daher chemisch verwertbarer Form gewonnen wird.

Diese Aufgabe wird erfindungsgemäss dadurch gelöst, dass das heisse Rauchgas in den Regeneratoren im Wärmetausch zu atomosphärischer Luft auf Temperaturen zwischen 0 und 60°C abgekühlt wird und bei dieser Temperatur mit einem zu mehr als 50 Gew.-% aus Tetraäthylenglykoldimethyläther bestehenden Lösungsmittel gewaschen wird.

Die Erfindung beruht auf der Erkenntnis, dass bei Kombination einer selektiven Absorption von $SO_2$ in einem geeigneten und vollständig regenerierbaren physikalisch wirkenden Waschmittel und einem Wärmeaustausch zwischen warmem Rauchgas und Verbrennungsluft ein überraschender synergistischer Effekt auftritt. Bei Verwendung des erfindungsgemäss vorgeschlagenen Lösungsmittels kann, da dieses Lösungsmittel einen im Vergleich zu Dimethylformamid niedrigen Dampfdruck besitzt, bei nahezu gleich hoher Löslichkeit für $SO_2$ bei Umgebungstemperatur gearbeitet werden.

Mit Vorteil erfolgt daher die Abkühlung des Rauchgases auf Temperaturen zwischen lediglich 20 und 50°C.

In Weiterbildung des Erfindungsgedankens ist vorgesehen, dass das Lösungsmittel auf Trockenbasis zu 60 bis 80 Gew.-% aus Tetraäthylenglykoldimethyläther, zu 15 bis 25 Gew.-% aus Triäthylenglykoldimethyläther, zu 2,5 bis 7,5 Gew.-% aus Pentaäthylenglykoldimethyläther und zu 2,5 bis 7,5 Gew.-% aus Halbäthern besteht. Diese Zusammensetzung bietet den Vorteil, dass der Dampfverlust des Lösungsmittels gering ist. Da im Lösungsmittel ausserdem keine hochmolekularen Homologen (mit mehr als 6 Äthylengruppen) enthalten sind, ist die Viskosität des Lösungsmittels so niedrig, dass es ohne Schwierigkeiten umgewälzt werden kann. Ganz besonders günstig ist es dabei, wenn das Lösungsmittel folgende Zusammensetzung auf Trockenbasis aufweist: 70 Gew.-% Tetraäthylenglykoldimethyläther, 20 Gew.-% Triäthylenglykoldimethyläther, 5 Gew.-% Pentaäthylenglykoldimethyläther und 5 Gew.-% Halbäther.

Für den Fall, dass das Rauchgas noch Staub oder andere Verunreinigungen, wie z.B. HCl, enthält, ist nach einer weiteren Ausgestaltungsform des erfindungsgemässen Verfahrens vorgesehen, dass das Lösungsmittel bis zu 10 Gew.-%, vorzugsweise 2 bis 8 Gew.-% Wasser enthält. Dieses Wasser dient ausserdem dazu, Lösungsmittel in der Waschsäule zurückzuwaschen und damit enventuelle Verluste zu reduzieren.

Gemäss einer weiteren Ausführungsform des erfindungsgemässen Verfahrens ist vorgesehen, dass das heisse Rauchgas vor Absorption des $SO_2$ einer Wasserwäsche unterworfen wird. Insbesondere eignet sich hierzu eine im Kreislauf betriebene und durch Kühlwasser gekühlte Wasserwäsche. Durch diese vorgeschaltete Wasserwäsche werden neben Reststaub auch halogenhaltige Stoffe aus dem Rauchgas entfernt sowie ein Teil des im Rauchgas enthaltenen Wasserdampfes auskondensiert und damit der $H_2O$-Gehalt und die Temperatur des Rauchgases bei Eintritt in die eigentliche Wäsche zur $SO_2$-Entfernung auf günstige Werte eingestellt, wie z.B. 15 bis 35°C bzw. 2 bis 6 Gew.-% $H_2O$.

In Weiterbildung des erfindungsgemässen Verfahrens ist darüber hinaus vorgesehen, dass das Lösungsmittel bei einem Druck von 0,4 bis 0,7 bar absolut und bei einer Temperatur von 85 bis 110°C regeneriert wird. Mit dieser Verfahrensführung kann ein Grossteil der bei der Beheizung der Regeneriersäule benötigten Wärme wieder nutzbar gemacht werden, z.B. zur weiteren Anwärmung von bereits warmem Wasser um etwa 10 bis 20°C.

Zur Abkühlung des Rauchgases werden wechselweise umschaltbare Regeneratoren verwendet, die mit einem säurebeständigen Wärmespeichermaterial bekannter Art gefüllt sind. Mit Vorteil werden mindestens drei Regeneratoren verwendet, wobei ein Regenerator von der Hauptmenge der Luft als Kühlluft, ein zweiter Regenerator von einer kleineren Menge als Spülluft und der dritte Regenerator von Rauchgas durchströmt werden. Mit der Verwendung von mindestens drei Regeneratoren wird ein kontinuierlicher Betrieb garantiert. Vorteilhaft beträgt die Spülluftmenge 5 bis 25%, vorzugsweise 10 bis 20%, der Gesamtluftmenge.

Das entschwefelte Rauchgas fällt mit Temperaturen zwischen 0 und 60°C, insbesondere zwischen 20 und 50°C, an. Diese Temperaturen reichen üblicherweise jedoch nicht aus, um einen genügend hohen Auftrieb im Kamin zu gewährleisten. Aus diesem Grunde ist erfindungsgemäss vorgesehen, dass die verunreinigte Spülluft dem nach der Wäsche anfallenden entschwefelten Rauchgas beigemischt wird, wodurch die Temperatur des Rauchgases ansteigt. In manchen Fällen, insbesondere wenn die Wäsche bei Temperaturen zwischen 0 und 30°C durchgeführt wird, reicht jedoch diese Anwärmung des entschwefelten Rauchgases nicht aus, da die Spülluftmenge relativ gering ist. Es ist deshalb nach einer weiteren erfindungsgemässen Variante vorgesehen, der Spülluft vor Eintritt in den zweiten Regenerator einen kleinen Teil des entschwefelten Rauchgases zuzumischen. Somit wird bereits ein Teil des gereinigten Rauchgases in dem Regenerator angewärmt und insgesamt nach Zumischung dieses Teils und der angewärmten Spülluft zum entschwefelten Rauchgas dessen Temperatur soweit erhöht, dass ein ausreichender Auftrieb des Rauchgases im Kamin gewährleistet ist.

Die Kühlluft wird gemäss einer weiteren Ausführungsform des Erfindungsgedankens nach Durchströmen des einen Regenerators mit erhöhter Temperatur zum überwiegenden Teil als Verbrennungsluft eingesetzt. Auf diese Weise wird der Gesamtwirkungsgrad des Verbrennungskessels erhöht. Der kleinere Teil der Kühlluft kann zum Regenerieren von Trocknern verwendet werden.

Mit dem erfindungsgemässen Verfahren wird somit die Abwärme des zu reinigenden Rauchgases praktisch vollständig ausgenutzt.

Im folgenden wird das erfindungsgemässe Verfahren anhand eines schematisch dargestellten Ausführungsbeispieles näher erläutert.

Zu reinigendes Rauchgas wird nach einer Staubabtrennung bei einer Temperatur vom 130 bis 150°C über Leitung 1 einem Gebläse 2 zugeführt, auf etwa 0,15 bar Überdruck verdichtet und im Regeneratorsystem 3 auf etwa 40°C abgekühlt. Das Regeneratorsystem besteht im Ausführungsbeispiel aus drei voneinander getrennten, mit keramischer Speichermasse, wie Raschigringen oder Berlsätteln, gefüllten Regeneratoren A, B, C. Während z.B. in Regenerator A Rauchgas in Strömungsrichtung von oben nach unten an der Speichermasse abgekühlt wird, wird ein Teilstrom des gereinigtes Rauchgases über Leitung 4 sowie ein kleiner Teilstrom der über Leitung 5 mit dem Gebläse 6 zugeführten atmosphärischen Luft bei Durchströmung von Regenerator B von der Temperatur des Waschprozesses bzw. von Umgebungstemperatur in Richtung von unten nach oben wieder aufgeheizt. Gleichzeitig wird in Regenerator C die Hauptmenge der über 5 zugeführten Luft ebenfalls in Strömungsrichtung von unten nach oben angewärmt und anschliessend zum grossen Teil über 7 einem nicht dargestellten Verbrennungskessel zugeführt. Auf diese Weise wird die Abwärme des zu reinigenden Rauchgases praktisch vollständig ausgenutzt, einerseits zur Vorwärmung der Verbrennungsluft, d.h. zur Erhöhung des Gesamtwirkungsgrades des Kessels, und andererseits zur erforderlichen Wiederaufheizung des gereinigten Rauchgases vor Eintritt in den Kamin.

Die Durchströmung der Regeneratoren wird zyklisch beispielsweise von rechts nach links nach einer Schaltzeit von z.B. ca. 3 Minuten vertauscht. Demnach wird im nächsten Zyklus der Regenerator A von gereinigtem Rauchgas und Spülluft, B von Kühlluft und C von ungereinigtem heissen Rauchgas durchströmt. Vor der Umschaltung der Kühlluft auf Regenerator B wird kurzzeitig für einige Sekunden die Durchströmung mit gereinigtem Rauchgas unterbrochen und statt dessen nur mit Spülluft gespült, bevor die Kühlluft zum Kessel geschaltet wird. Hierdurch wird die Verbrennung im nachgeschalteten Kessel durch die Schaltung nicht gestört, sonders es strömt immer kontinuierlich reine Luft mit praktisch konstant warmer Temperatur in den Verbrennungsraum. Die Spülluft und der angeheizte Anteil des entschwefelten Rauchgases, der 10 bis 25% der Gesamtmenge betragen kann, werden über Leitung 8 dem Hauptteil des gereinigten Rauchgases in Leitung 9 vor dem Kamin zugemischt und damit entsprechend angewärmt, z.B. auf ca. 65°C.

Bei der Abkühlung des Rauchgases im Regenerator A wird der Säuretaupunkt unterschritten, d.h. Säuretröpfchen kondensieren auf der Speichermasse aus. Dieses Kondensat wird bei der Durchströmung von Luft in umgekehrter Richtung wieder verdampft und mit der Kühlluft zum Verbrennungsraum gasförmig zurückgetragen. Die Rückverdampfung wird unterstützt dadurch, dass die Reaktion

$$H_2O + SO_2 \rightleftarrows H_2SO_4$$

wegen des wesentlich niedrigeren Anteiles an Wasserdampf der Kühlluft gegenüber dem des Rauchgases bei der Durchströmung mit Luft bevorzugt von rechts nach links abläuft. Das so mit der Luft zum Kessel zurückgetragene $SO_3$ wird bei der hohen Verbrennungstemperatur zum grossen Teil wieder zu $SO_2$ reduziert. Die interne $SO_3$-Rückführung kann also nur zu einem geringen Anstieg, d.h. praktisch nur zu einer Erhöhung des $SO_3$-Gehaltes von einigen ppm im Rauchgas führen, bis ein konstanter Pegel erreicht ist.

Das auf etwa 40°C gekühlte Rauchgas wird über Leitung 10 einer Waschsäule 11 zugeführt und durch physikalische Absorption von $SO_2$ entschwefelt. Als Waschmittel dient ein Äthylenglykoldimethyläther der beanspruchten Zusammensetzung mit einigen Prozent Wasser, das über Leitung 12 der Waschsäule in der Mitte aufgegeben wird. Vor Eintritt in diese Wäsche werden im unteren Abschnitt der Waschsäule durch einen geschlossenen Wasserkreislauf 13 Reste an Staub und direkten Säurebildnern, wie $SO_3$ und HCl ausgewaschen. Am oberen Ende der Waschsäule 11 wird durch eine relativ kleine Menge an über 14 zurückgeführtem Wasser der dem sehr niedrigen Dampfdruck entsprechende Anteil an gasförmigen Lösungsmittel zurückgewaschen. Das entschwefelte Rauchgas verlässt die Waschsäule am Kopf der Leitung 9.

Das mit $SO_2$ und einer geringen Menge an mitgelöstem $CO_2$ beladene Lösungsmittel wird über Leitung 15 abgezogen, in einem Wärmetauscher 16 gegen regeneriertes Waschmittel aufgewärmt und in eine Regeneriersäule 17 geleitet. In der Regeneriersäule 17 werden durch Beheizung 18 mit Niederdruckdampf die gelösten Gase über Kopf (Leitung 19) abgetrieben.

Zur Rückgewinnung des im Waschwasser vom Kopf der Waschsäule 11 gelösten Lösungsmittels wird auch dieser Strom über Leitung 20 im oberen Abschnitt der Regeneriersäule durch Destillation in konzentriertes Lösungsmittel und Wasserdampf getrennt. Dieser Wasserdampf wird am Kopf der Regeneriersäule 17 an einem Kühlwasser gekühlten Kondensator 21 rückverflüssigt.

Mit besonderem Vorteil wird der Druck und damit das Temperaturniveau in der Regeneriersäule 17 so gewählt, dass 50 bis 75% der bei der Beheizung 18 benötigten Wärme wieder nutzbar gemacht werden. Als geeignet haben sich hierbei ein Druck zwischen 0,4 und 0,7 bar absolut und eine Sumpftemperatur von 85 bis 110°C erwiesen. Zur Wärmerückgewinnung wird in einem am Kopf der Regeneriersäule angebrachten Wärmetauscher warmes Wasser von 50 bis 60°C, z.B. Vakuumdampfkondensat in Energiekraftwerken oder Rücklaufwasser bei Fernwärme (Heizkraftwerk), auf etwa 70 bis 85°C angewärmt. Dieser Wärmetauscher könnte beispielsweise mit dem Kondensator 21 gekoppelt sein.

Die beiden regenerierten Flüssigkeitsströme, nämlich regeneriertes Lösungsmittel vom Sumpf und Waschwasser vom Kopf, gehen über Leitungen 12 bzw. 14 zurück zur Waschsäule 11, wobei das regenerierte Lösungsmittel im Wärmetauscher 16 auf etwa 40°C abgekühlt wird.

Um zu verhindern, dass durch Sekundärreaktionen im wasserhaltigen Lösungsmittelkreislauf eine Schädigung des Absorptionsmediums auftritt, wird die Regeneriersäule 17 unter leichtem Unterdruck (ca. 0,6 bar absolut) und damit bei möglichst nicht zu hoher Sumpftemperatur betrieben.

Das im Kopf der Regeneriersäule 17 gewonnene $SO_2$-reiche Gas wird über Leitung 19 einem Verdichter 22 zugeführt, auf einen Druck von ca. 2,5 bar gefördert und nach Trocknen an säurefesten, umschaltbaren Absorbern 23 in einem Wärmetauscher 24 gegen Kältemittel verflüssigt. Der enthaltene Anteil an $CO_2$ sowie Reste von $N_2$ kondensieren dabei praktisch nicht, sie gehen zusammen mit dem Dampfdruck bei Verflüssigungstemperatur entsprechenden gasförmigen Anteil an gasförmigem $SO_2$ über Leitung 26 zurück zur Waschsäule 11. In einem Tank 25 kann somit reines, trockenes, flüssiges $SO_2$ gesammelt und gespeichert werden zu beliebiger Weiterverwendung.

Die Absorber 23 sind umschaltbar, d.h. während z.B. im Absorber 23a der $SO_2$-haltige Gasstrom getrocknet wird, wird der Absorber 23b durch einen Teil der im Regenerator C angewärmten Kühlluft, die über Leitung 27 herangeführt wird, getrocknet.

Durch Sekundärreaktionen im geschlossenen System gebildete Säuren können aus dem Waschkreislauf an verschiedenen Stellen, die beispielhaft durch die gestrichelten Leitungen 28a, 28b und 28c dargestellt sind, ausgeschleust und in einem Behälter 29 durch Zugabe von Chemikalien, wie z.B. CaO, neutralisiert werden.

Es ist klar, dass das erfindungsgemässe Verfahren auch dann ausführbar ist, wenn z.B. nur zwei Regeneratoren oder beispielsweise keine Trockner für das $SO_2$-haltige Gas verwendet werden.

Unter Zugrundelegung des beschriebenen Ausführungsbeispieles sieht die Wärmebilanz des verwendeten Regeneratorsystems folgendermassen aus:

Die Wärmekapazität (Menge × spezifischer Wärme) des Rauchgases ist im allgemeinen ca. 10% höher als die der benötigten Verbrennungsluft, d.h. bei Abkühlung des Rauchgases um ca. 100°C könnten also ausser der Verbrennungsluft noch ca. 10% des gereinigten Rauchgases um denselben Betrag von 100°C angewärmt werden. Damit würde das gesamte gereinigte Gas vor dem Kamin um ca. 10°C angewärmt werden. Eine Wiedererwärmung des gereinigten Gases um ca. 25%, d.h. auf etwa 65°C durch Erhöhung des entsprechenden Anteiles im Regenerator geht auf Kosten einer um ca. 15% geringeren Aufwärmung der Verbrennungsluft. Für die Energierückgewinnung durch die Nutzung dieser, bei der schwefelhaltigen Rauchgasen üblicherweise verloren gegebenen Abwärme bedeutet dies, dass ca. 75% der Abwärme für den Kraftwerksprozess und ca. 25% für die Rauchgaswiederaufwärmung nach der Entschwefelung genutzt wird.

*Beispiel*

Es werden 1.600.000 $Nm^3/h$ Rauchgas aus einem 500 MW Kohlenkraftwerk (3,5% S in der Kohle) gereinigt. Das Rauchgas hat die folgende Zusammensetzung :

76,6 Vol.-% $N_2$
2,1 Vol.-% $O_2$

12,2 Vol.-% $CO_2$
0,24 Vol.-% $SO_2 + SO_3$ (≙ 3840 $Nm^3/h$ ≈ 11 t/h)
8,86 Vol.-% $H_2O$

Das Rauchgas wird mit 1600 t/h Lösungsmittel erfindungsgemässen Zusammensetzung gewaschen. Der Rest $SO_2$-Gehalt im gereinigten Gas beträgt 100 Vppm (= 160 $Nm^3/h$ = 480 kg/h). Somit wird bei Verwendung des erfindungsgemässen Lösungsmittels ein Entschwefelungsgrad von 95,6% erreicht.

Der Dampfbedarf für die Regenerierung des beladenen Lösungsmittels beträgt ca. 30 t/h Dampf von 2 bar. Zur Verdichtung des regenerierten Lösungsmittels im Vakuumverdichter 22 ist eine Leistung von ca. 400 kW erforderlich.

## Patentansprüche

1. Verfahren zur Entfernung unerwünschter gasförmiger Bestandteile aus heissen, bei der Verbrennung kohlenstoffhaltiger Brennstoffe anfallenden Rauchgasen, bei dem das Rauchgas zur Abkühlung und Vorreinigung über Regeneratoren geleitet und anschliessend zur Absorption von $SO_2$ einer Wäsche mit einem physikalisch wirkenden Lösungsmittel zugeführt wird, das nach Aufnahme des $SO_2$ einer Regenerierung unterzogen und in die Wäsche zurückgeführt wird, dadurch gekennzeichnet, dass das heisse Rauchgas in den Regeneratoren im Wärmetausch zu atmosphärischer Luft auf Temperaturen zwischen 0 und 60°C abgekühlt wird und bei dieser Temperatur mit einem zu mehr als 50 Gew.-% aus Tetraäthylenglykoldimethyläther bestehenden Lösungsmittel gewaschen wird.

2. Verfahren nach Anspruch 1, dadurch gekennzeichnet, dass die Abkühlung auf Temperaturen zwischen 20 und 50°C erfolgt.

3. Verfahren nach Anspruch 1 oder 2, dadurch gekennzeichnet, dass das Lösungsmittel auf Trockenbasis zu 60 bis 80 Gew.-% aus Tetraäthylenglykoldimethyläther, zu 15 bis 25 Gew.-% aus Triäthylenglykoldimethyläther, zu 2,5 bis 7,5 Gew.-% aus Pentaäthylenglykoldimethyläther und zu 2,5 bis 7,5 Gew.-% aus Halbäthern besteht.

4. Verfahren nach Anspruch 3, dadurch gekennzeichnet, dass das Lösungsmittel auf Trockenbasis zu 70 Gew.-% aus Tetraäthylenglykoldimethyläther, zu 20 Gew.-% aus Triäthylenglykoldimethyläther, zu 5 Gew.-% aus Pentaäthylenglykoldimethyläther und zu 5 Gew.-% aus Halbäthern besteht.

5. Verfahren nach einem der Ansprüche 1 bis 4, dadurch gekennzeichnet, dass das Lösungsmittel bis zu 10 Gew.-%, vorzugsweise 2 bis 8 Gew.-% Wasser enthält.

6. Verfahren nach einem der Ansprüche 1 bis 5, dadurch gekennzeichnet, dass das heisse Rauchgas vor Absorption des $SO_2$ einer Wasserwäsche unterzogen wird.

7. Verfahren nach einem der Ansprüche 1 bis 6, dadurch gekennzeichnet, dass das Lösungsmittel bei einem Druck von 0,4 bis 0,7 bar absolut und bei einer Temperatur von 85 bis 110°C regeneriert wird.

8. Verfahren nach einem der Ansprüche 1 bis 7, dadurch gekennzeichnet, dass mindestens drei Regeneratoren verwendet werden, wobei ein Regenerator von der Hauptmenge der Luft als Kühlluft, ein zweiter Regenerator von einer kleineren Menge als Spülluft und der dritte Regenerator von Rauchgas durchströmt wird.

9. Verfahren nach Anspruch 8, dadurch gekennzeichnet, dass die Spülluftmenge 5 bis 25%, vorzugsweise 10 bis 20% der Gesamtluft beträgt.

10. Verfahren nach Anspruch 8 oder 9, dadurch gekennzeichnet, dass die verunreinigte Spülluft dem nach der Wäsche anfallenden, entschwefelten Rauchgas beigemischt wird.

11. Verfahren nach einem der Ansprüche 8 bis 10, dadurch gekennzeichnet, dass der Spülluft vor Eintritt in den zweiten Regenerator ein kleiner Teil des entschwefelten Rauchgases zugemischt wird.

12. Verfahren nach einem der Ansprüche 8 bis 10, dadurch gekennzeichnet, dass die Kühlluft nach Durchströmen des einen Regenerators mit erhöhter Temperatur zum überwiegenden Teil als Verbrennungsluft eingesetzt wird.

13. Verfahren nach Anspruch 12, dadurch gekennzeichnet, dass der kleinere Teil der Kühlluft zum Regenerieren von Trocknern verwendet wird.

## Claims

1. A method of removing undesired gaseous components from hot flue gases resulting from the combustion of carbonaceous fuels, in which the fuel gas is passed through regenerators for cooling and precleaning and, for the absorption of $SO_2$, is subsequently fed to washing with a physically-acting solvent which after the absorption of the $SO_2$ is subjected to regeneration and returned to the washing step, characterised in that the flue gas is cooled to temperatures of between 0 and 60°C in heat exchange with atmospheric air in the regenerators, and at this temperature, is washed with a solvent which contains more than 50% by weight of tetraethyleneglycol dimethyl ether.

2. A method as claimed in Claim 1, characterised in that the cooling is effected to temperatures of between 20 and 50°C.

3. A method as claimed in Claim 1 or Claim 2, characterised in that the solvent on the dry basis consists of 60 to 80% by weight of tetraethyleneglycol dimethyl ether, 15 to 25% by weight of triethyleneglycol dimethyl ether, 2.5 to 7.5% by weight of pentaethyleneglycol dimethyl ether and of 2.5 to 7.5% by weight of half-ethers.

4. A method as claimed in Claim 3, characterised in that the solvent on the dry basis consists of 70% by weight of tetraethyleneglycol dimethyl ether, 20% by weight of triethyleneglycol dimethyl ether, 5% by weight of pentaethyleneglycol dimethyl ether and 5% by weight of half-ethers.

5. A method as claimed in one of Claims 1 to 4, characterised in that the solvent contains up to 10% by weight, preferably 2 to 8% by weight, of water.

6. A method as claimed in one of Claims 1 to 5, characterised in that the hot flue gas is subjected to a water wash prior to the absorption of the $SO_2$.

8. A method as claimed in one of Claims 1 to 7, characterised in that at least three regenerators are used, the main quantity of the air passing through one regenerator as cooling air, a smaller quantity passing through the second regenerator as scavenging air and flue gas flowing through the third regenerator.

9. A method as claimed in Claim 8, characterised in that the amount of scavenging air is 5 to 25%, preferably 10 to 20%, of the total air.

10. A method as claimed in Claim 8 or Claim 9, characterised in that the contaminated scavenging air is added to the desulphurized flue gas present after the washing step.

11. A method as claimed in one of Claims 8 to 10, characterised in that prior to its entry into the second regenerator, a small portion of the desulphurized flue gas is added to the scavenging air.

12. A method as claimed in one of Claims 8 to 10, characterised in that the cooling air, after passage through the one regenerator, is used at an increased temperature to a large extent as combustion air.

13. A method as claimed in Claim 12, characterised in that the smaller portion of the cooling air is used for regenerating dryers.

## Revendications

1. Procédé pour éliminer des composants gazeux indésirables des gaz fumés chauds formés lors de la combustion de combustibles carbonés, dans lequel on refroidit et purifie préalablement le gaz de fumée en le faisant passer par des régénérateurs pour l'amener ensuite dans une zone de lavage utilisant un solvant à action physique, en vue de l'absorption du $SO_2$, ledit solvant étant soumis, après l'absorption du $SO_2$, à une étape de régénération et recyclé vers la zone de lavage, caractérisé en ce qu'on refroidit le gaz de fumée chaud dans les régénérateurs par échange thermique avec de l'air atmosphérique à des températures comprises entre 0 et 60°C et qu'on le lave à cette température à l'aide d'un solvant renfermant plus de 50% en poids de diméthyléther de tétraéthylène-glycol.

2. Procédé selon la revendication 1, caractérisé en ce qu'on effectue le refroidissement à des températures comprises entre 20 et 50°C.

3. Procédé selon la revendication 1 ou 2, caractérisé en ce que, rapporté à la teneur en substance sèche, le solvant renferme 60 à 80% en poids de diméthyléther de tétraéthylène-glycol, 15 à 25% en poids de diméthyléther de triéthylène-glycol, 2,5 à 7,5% en poids de diméthyléther de pentaéthylène-glycol et 2,5 à 7,5% en poids de semi-éthers.

4. Procédé selon la revendication 3, caractérisé en ce que, rapporté à la teneur en substance sèche, le solvant renferme 70% en poids de diméthyléther de tétraéthylène-glycol, 20% en poids de diméthyléther de triéthylène-glycol, 5% en poids de diméthyléther de pentaéthylène-glycol et 5% en poids de semi-éthers.

5. Procédé selon une des revendications 1 à 4, caractérisé en ce que le solvant renferme jusqu'à 10% en poids, de préférence 2 à 8% en poids, d'eau.

6. Procédé selon une des revendications 1 à 5, caractérisé en ce qu'on soumet le gaz de fumée chaud à un lavage à l'eau avant l'absorption du $SO_2$.

7. Procédé selon une des revendications 1 à 6, caractérisé en ce que le solvant est régénéré sous une pression absolue de 0,4 à 0,7 bar et à une température de 85 à 110°C.

8. Procédé selon une des revendications 1 à 7, caractérisé en ce qu'on utilise au moins trois régénérateurs, l'un de ces régénérateurs étant traversé de la majeure partie de l'air en tant qu'air de refroidissement, une deuxième régénérateur étant traversé par partie plus faible en tant qu'air de balayage, cependant que le troisième régénérateur est traversé par du gaz de fumée.

9. Procédé selon la revendication 8,caractérisé en ce que la proportion d'air de balayage représente 5 à 25%, de préférence 10 à 20%, de la quantité d'air totale.

10. Procédé selon la revendication 8 ou 9, caractérisé en ce que l'air de balayage non épuré est mélangé au gaz de fumée désulfuré tel que recueilli après le lavage.

11. Procédé selon une des revendications 8 à 10, caractérisé en ce qu'on mélange une faible partie du gaz de fumée désulfuré à l'air de balayage, avant l'admission dans le deuxième régénérateur.

12. Procédé selon une des revendications 8 à 10, caractérisé en ce qu'on utilise l'air de refroidissement en grande partie en tant qu'air de combustion réchauffé, après sa traversée de l'un des régénérateurs.

13. Procédé selon la revendication 12, caractérisé en ce que la plus faible partie de l'air de refroidissement est utilisée pour la régénération de dispositifs de séchage.

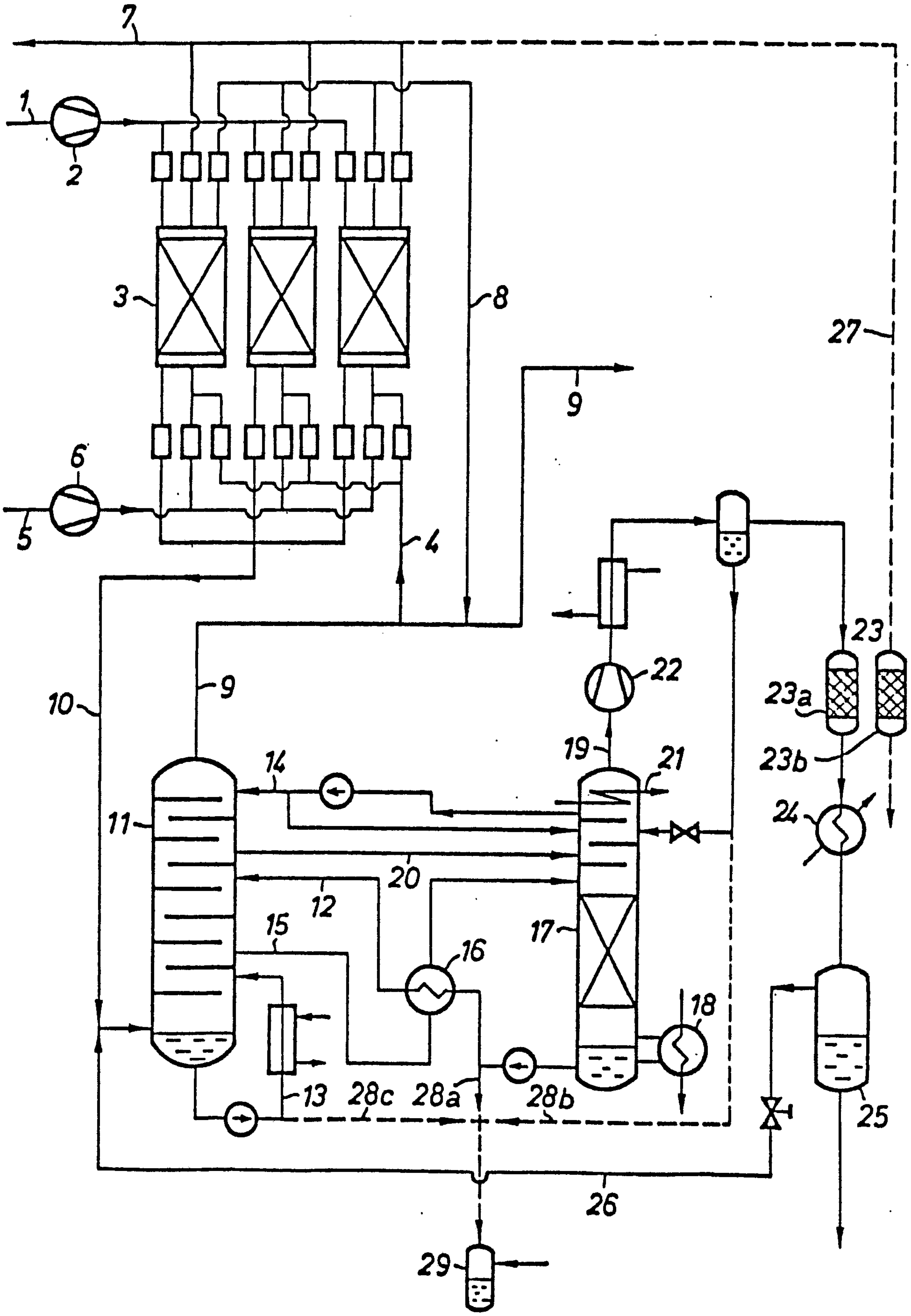
7
1
2
3
8
9
6
5
4
10
9
11
14
12
20
15
13
16
17
18
19
21
22
23
23a
23b
24
25
26
27
28a
28b
28c
29